(19) Europäisches Patentamt
European Patent Office
Office européen des brevets

(11) Veröffentlichungsnummer: **0 285 934**
**B1**

# (12) EUROPÄISCHE PATENTSCHRIFT

(45) Veröffentlichungstag der Patentschrift: **30.01.91**

(51) Int. Cl.[5]: **C 07 C 233/57**, C 07 C 231/00, C 07 C 323/18, A 01 N 53/00

(21) Anmeldenummer: **88104890.4**

(22) Anmeldetag: **26.03.88**

(54) **Cyclopropancarboxamide.**

(30) Priorität: **03.04.87 DE 3711268**

(43) Veröffentlichungstag der Anmeldung:
**12.10.88 Patentblatt 88/41**

(45) Bekanntmachung des Hinweises auf die Patenterteilung:
**30.01.91 Patentblatt 91/05**

(84) Benannte Vertragsstaaten:
**BE CH DE ES FR GB GR IT LI NL**

(56) Entgegenhaltungen:
**EP-A-0 004 334**
**DE-A-3 211 988**
**US-A-4 166 735**

(73) Patentinhaber: **BASF Aktiengesellschaft**
**Carl-Bosch-Strasse 38**
**D-6700 Ludwigshafen (DE)**

(72) Erfinder: **Neubauer, Hans-Jürgen, Dr.**
**B 4,2**
**D-6800 Mannheim 1 (DE)**
Erfinder: **Bürstinghaus, Rainer, Dr.**
**Robert-Koch-Strasse 2**
**D-4404 Telgte (DE)**
Erfinder: **Künast, Christoph, Dr.**
**Salierstrasse 2**
**D-6701 Otterstadt (DE)**
Erfinder: **Hofmeister, Peter, Dr.**
**Bernard-Humblot-Strasse 12**
**D-6730 Neustadt (DE)**

**EP 0 285 934 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die vorliegende Erfindung betrifft neue Cyclopropancarboxamide der allgemeinen Formel I

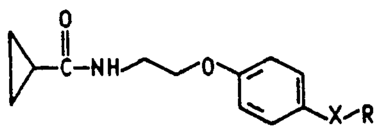

(I),

in der

R $C_1$—$C_{12}$-Alkyl, $C_2$—$C_{12}$-Alkenyl, $C_2$—$C_{12}$-Alkinyl, $C_1$—$C_{12}$-Halogenalkyl, $C_2$—$C_{12}$-Halogenalkenyl, $C_2$—$C_{12}$-Halogenalkinyl, $C_3$—$C_{12}$-Alkoxyalkyl, $C_3$—$C_8$-Cycloalkyl, $C_4$—$C_{12}$-Cycloalkyl-alkyl, $C_3$—$C_8$-Halogencycloalkyl, $C_4$—$C_{12}$-Halogencycloalkyl-alkyl, $C_4$—$C_{12}$-Cycloalkyl-halogenalkyl oder $C_4$—$C_{12}$-Halogencycloalkyl-halogenalkyl und

X Sauerstoff oder Schwefel bedeuten.

Außerdem betrifft die vorliegende Erfindung die Herstellung der Verbindungen I, Schädlingsbekämpfungsmittel, die die Verbindungen I enthalten, und ein Verfahren zur Bekämpfung von Schädlingen.

Aus der DE—A 26 33 069 ist der Cyclopropancarbonsäureester $I^I$

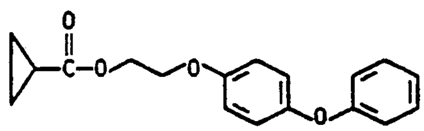

(I'),

aus der EP—A—4334 ist die Verbindung $I^{II}$

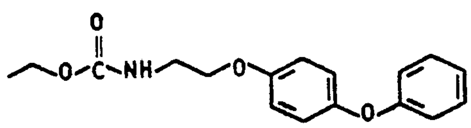

($I^{II}$)

als Schädlingsbekämpfungsmittel bekannt. Ferner ist aus der EP—A—169 169 die Verbindung $I^{III}$

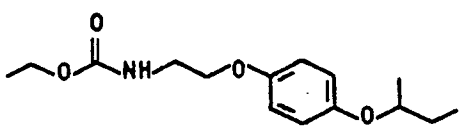

($I^{III}$)

als Schädlingsbekämpfungsmittel und aus der DE—A—26 37 395 die Verbindung $I^{IV}$

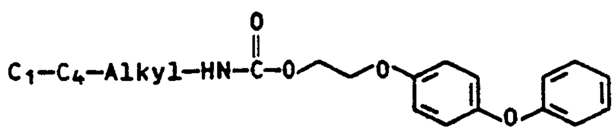

($I^{IV}$),

als Schädlingsbekämpfungsmittel und zur Regulierung des Pflanzenwachstums bekannt.

Die Wirkung der genannten Verbindungen läßt jedoch zu wünschen übrig.

Von R. Zurfluh und S. Dorn wurden in Abstracts, "The Sixth International Congress of Pesticide Chemistry" (JUPAC), 2A—01, August 1986, Canada, Verbindungen der Struktur $I^V$

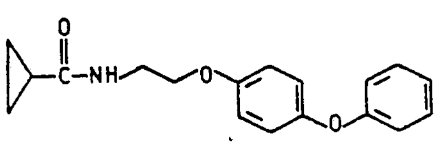

($I^V$)

beschrieben. Essentiell für eine insektizide Wirksamkeit ist die aromatische Phenoxyphenyleinheit. Solche Verbindungen sind auch aus der europäischen Anmeldung 87 111 934.3 bekannt.

Der Erfindung lag nun die Aufgabe zugrunde, neue Cyclopropancarboxamide I mit verbesserter Wirkung und/oder gegen andere Schädlinge wirksamere Verbindungen I bereitzustellen.

Demgemäß wurden die eingangs definierten neuen Cyclopropancarboxamide I sowie Verfahren zu deren Herstellung gefunden. Ferner wurde gefunden, daß sich die Verbindungen I hervorragend als Schädlingsbekämpfungsmittel eignen.

Die Verbindungen I sind aus 2-Phenoxy-ethylaminen II und Cyclopropancarbonsäurehalogeniden III erhältlich.

Die Umsetzung eines 2-Phenoxy-ethylamins II mit einem Cyclopropancarbonsäurehalogenid III, bevorzugt dem Säurechlorid von III,

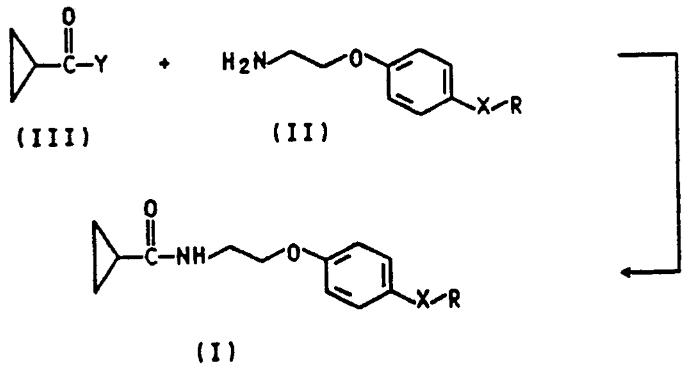

führt in Anwesenheit eines säurebindenden Mittels bei Temperaturen von (−30) bis 120°C, vorzugsweise von (−10) bis 80°C und besonders bevorzugt von 0 bis 50°C sowie Drücken zwischen 1 und 10 bar zu den Cyclopropancarboxamiden I. Als säurebindendes Mittel kann das 2-Phenoxy-ethylamin eingesetzt werden, üblicherweise verwendet man jedoch die üblichen basischen Mittel, insbesondere aliphatische, aromatische oder heterocyclische Amine wie beispielsweise Triethylamin, Dimethylamin, Piperidin, Dimethylanilin, Dimethylbenzylamin, Pyridin und 4-Dimethylaminopyridin. Das Verhältnis säurebindendes Mittel zu Verbindung III beträgt 0,5:1 bis 20:1, vorzugsweise 0,7:1 bis 5:1 und besonders bevorzugt 0,9:1 bis 1,5:1.

Üblicherweise setzt man die Ausgangsstoffe II und III in stöichiometrischem Verhältnis ein. Ein Überschuß der einen oder anderen Komponente kann in Einzelfällen aber durchaus vorteilhaft sein.

Die Umsetzung verläuft gewöhnlich oberhalb von (−30°C) mit ausreichender Geschwindigkeit. 100°C müssen im allgemeinen nicht überschritten werden. Da sie in einigen Fällen unter Wärmeentwicklung verläuft, kann es von Vorteil sein, eine Kühlmöglichkeit vorzusehen.

Die 2-Phenoxyethylamine II sind z.T. bekannt oder lassen sich nach bekannten Methoden (EP—A1—4334) herstellen. Unter den Cyclopropancarbonsäurehalogeniden III wie dem Fluorid, Chlorid oder Bromid ist das Säurechlorid kommerziell erhältlich.

Die Umsetzungen werden zweckmäßigerweise in einem Lösungs- oder Verdünnungsmittel ausgeführt. Hierzu sind beispielsweise geeignet: aliphatische und aromatische, gegebenenfalls chlorierte Kohlenwasserstoffe wie Petrolether, Benzol, Toluol, Xylol, Benzin, Dichlormethan, Chloroform, Tetrachlormethan, 1,2-Dichlormethan und Chlorbenzol, Ether oder Ester wie Diethyl- und Di-n-Butylether, Methyl-tert.-butylether, Tetrahydrofuran, Dioxan und Essigsäureethylester; Ketone, beispielsweise Aceton, Methylethylketon und Methylisopropylketon; ferner Nitrile, wie Acetonitril und Propionitril; aprotische dipolare Lösungsmittel, wie Dimethylformamid, Dimethylsulfoxid oder Pyridin. Auch Gemische dieser Stoffe können als Lösungs- oder Verdünnungsmittel verwendet werden.

Die neuen Verbindungen der Formel I fallen teilweise in Form farbloser oder schwach bräunlich gefärbter Öle an, die sich durch längeres Erwärmen unter vermindertem Druck auf mäßig erhöhte Temperatur ("Andestillieren") von den letzten flüchtigen Anteilen befreien und auf diese Weise reinigen lassen. Erhält man die Verbindungen der Formel I in kristalliner Form, so kenn ihre Reinigung durch Umkristallisation erfolgen.

Die erfindungsgemäßen Verbindungen der Formel I können außerdem noch nach praktisch allen bekannten Verfahren der Carboxamidsynthese hergestellt werden, beispielsweise durch Umsetzung von 2-Phenoxyethylaminen mit entsprechenden Carbonsäureestern, Carbonsäuren oder deren Salzen, Carbonsäureanhydriden oder Ketenderivaten (vgl. C. Ferri, Reaktionen der Organischen Synthese, Georg Thieme Verlag, Stuttgart 1978, S. 542 und die dort zitierte Literatur).

In den Verbindungen I steht der Rest R im einzelnen für folgende Substituenten:

unverzweigtes oder verzweigtes $C_1$—$C_{12}$-Alkyl, bevorzugt für $C_1$—$C_8$-Alkyl, besonders bevorzugt für verzweigte $C_3$—$C_8$-Alkyl, wie Isopropyl, Isobutyl, sec.-Butyl, tert.-Butyl, Isopentyl, 1-Methyl-butyl, Isohexyl, 1-Methyl-pentyl, Isopheptyl, 1-Methyl-hexyl, 1-Methyl-heptyl, 1,3-Dimethyl-butyl, 1,2-Dimethyl-butyl, 3-Methyl-pent-1-yl, 4-Methyl-but-1-yl, 1-Ethyl-pro-1-yl und 1-Ethyl-but-1-yl,

unverzweigtes oder verzweigtes $C_2$—$C_{12}$-Alkenyl, bevorzugt für $C_2$—$C_8$-Alkenyl, besonders bevorzugt für $C_3$—$C_6$-Alkenyl, wie Allyl, 1-Methyl-allyl, 1,3-Dimethyl-but-2-enyl, 1-Methyl-but-2-enyl und But-3-en-1-yl,

unverzweigtes oder verzweigtes $C_2$—$C_{12}$-Alkinyl, bevorzügt für $C_2$—$C_8$-Alkinyl, besonders bevorzugt für $C_2$—$C_4$-Alkinyl, wie Ethinyl, Prop-1-in-1-yl, Prop-2-in-1-yl, 1-Methyl-prop-2-inyl, But-2-in-1-yl und But-3-in-1-yl,

unverzweigtes oder verzweigtes $C_1$—$C_{12}$-Halogenalkyl, bevorzugt für $C_1$—$C_4$-Halogenalkyl, besonders bevorzugt für $C_1$—$C_4$-Fluor- und Chlor-alkyl, wie Trifluormethyl, Difluormethyl, Fluormethyl,

Trichlormethyl, Pentafluorethyl, 2,2,2-Trifluoreth-1-yl, 2,2,2-Trichloreth-1-yl, 1-Fluormethyl-(2-fluor)-ethyl und 1-Chlormethyl-(2-chlor)-ethyl,

unverzweigtes oder verzweigtes $C_2$—$C_{12}$-Halogenalkenyl, bevorzugt für $C_2$—$C_4$-Halogenalkenyl, besonders bevorzugt für $C_2$—$C_4$-Fluor- und Chlor-alkenyl, wie 1,2,2-Trifluorethen-1-yl, 1,2,2-Trichlorethen-1-yl, 3,3-Difluorprop-2-en-1-yl und 3,3-Dichlorprop-2-en-1-yl,

unverzweigtes oder verzweigtes $C_2$—$C_{12}$-Halogenalkinyl, bevorzugt für $C_2$—$C_4$-Halogenalkinyl, besonders bevorzugt für $C_2$—$C_4$-Fluor- und Chlor-alkinyl, wie Fluorethinyl, Chlorethinyl, 3-Fluorprop-2-in-1-yl und 3-Chlorprop-2-in-1-yl,

unverzweigtes oder verzweigtes $C_3$—$C_{12}$-Alkoxyalkyl, bevorzugt für $C_3$—$C_9$-Alkoxyalkyl, besonders bevorzugt $C_1$—$C_4$-alkoxysubstituierte $C_1$—$C_5$-Alkoxyalkyl wie beispielsweise 2-Methoxyethyl, 2-Methoxyprop-1-yl, 3-Methoxyprop-2-yl, 3-Methoxybut-1-yl, 4-Methoxybut-2-yl, 4-Methoxybut-3-yl, 5-Methoxypent-3-yl, 2-Ethoxyethyl, 2-Ethoxyprop-1-yl, 3-Ethoxyprop-1-yl, 3-Ethoxybut-1-yl, 3-Ethoxybut-2-yl, 5-Ethoxypent-2-yl, 2-Propoxyethyl, 2-Propoxyprop-1-yl, 3-Propoxybut-1-yl, Butoxymethyl oder 2-Butoxyprop-2-yl,

$C_3$—$C_8$-Cycloalkyl, bevorzugt für $C_3$—$C_6$-Cycloalkyl, wie Cyclopropyl, Cyclobutyl, Cyclopentyl und Cyclohexyl,

$C_4$—$C_{12}$-Cycloalkyl-alkyl, bevorzugt $C_4$—$C_8$-Cycloalkyl-alkyl, wie Cyclopropyl-methyl, Cyclopropylethyl, Cyclobutyl-methyl, Cyclopentyl-methyl, Cyclohexyl-methyl und Cyclohexyl-ethyl,

$C_3$—$C_8$-Halogencycloalkyl, bevorzugt für $C_3$—$C_6$-Halogencycloalkyl, besonders bevorzugt für $C_3$—$C_6$-Fluor- und Chlorcycloalkyl, wie 2,2-Difluorcycloprop-1-yl, 2,2-Dichlorcycloprop-1-yl,

$C_4$—$C_{12}$-Halogencycloalkyl-alkyl, bevorzugt für $C_4$—$C_8$-Halogencycloalkyl-alkyl, besonders bevorzugt für $C_4$—$C_8$-Fluor und Chlorcycloalkyl-alkyl wie 2,2-Difluorcycloprop-1-yl-methyl, 2,2-Dichlorcycloprop-1-yl-methyl,

$C_4$—$C_{12}$-Cycloalkyl-halogenalkyl, bevorzugt für $C_4$—$C_8$-Cycloalkyl-halogenalkyl, besonders bevorzugt für $C_4$—$C_8$-Cycloalkyl-fluor- oder -chloralkyl, wie 2-Cyclopropyl-2-chlorethyl und 2-Cyclopropyl-1,1-difluorethyl,

$C_4$—$C_{12}$-Halogencycloalkyl-halogenalkyl, bevorzugt für $C_4$—$C_8$-Halogencycloalkyl-halogenalkyl, besonders bevorzugt für $C_4$—$C_8$-Fluor- und Chlorcycloalkyl-fluor- und -chloralkyl, wie 2,2-Dichlorcycloprop-1-yl-2-chlorethyl.

Unter den Resten X wird Sauerstoff bevorzugt.

Die erfindungsgemäßen Verbindungen I können ein oder mehrere Asymmetriezentren im Substituenten R enthalten. Die vorliegende Erfindung schließt alle möglichen Stereoisomeren, Diastereomeren, Enantiomeren, Diastereomeren- und Enantiomerengemische ein. Bei den in der Tabelle der Beispielverbindungen betreffenden Verbindungen handelt es sich um das jeweilige racemische Gemisch.

Im Gegensatz zu den meisten bisher bekannten Schädlingsbekämpfungsmitteln, die als Kontakt- oder Fraßgifte die Tiere töten, lähmen oder vertreiben, greifen die Verbindungen der Formel I in das hormonale System des tierischen Organismus ein. Bei Insekten wird beispielsweise die Umwandlung zur Imago, die Ablage von entwicklungsfähigen Eiern und die Entwicklung von abgelegten normalen Eiern gestört und dadurch die Generationsfolge unterbrochen. Für Wirbeltiere sind die erfindungsgemäßen Mittel praktisch ungiftig. Die Verbindungen der Formel I werden überdies leicht zu Stoffen abgebaut, die in der natürlichen Umgebung vorkommen und von Mikroorganismen weiter zerlegt werden. Die Gefahr einer Kumulation ist deshalb ausgeschlossen. Sie können demgemäß unbedenklich zur Bekämpfung von Schädlingen bei Tieren, Pflanzen und Vorräten und im Wasser eingesetzt werden.

Als besonders wirksam haben sich diejenigen Cyclopropancarboxamide I erwiesen, bei denen der Rest R verzweigte Alkyl-, Alkenyl-, Alkinyl- oder Alkoxyalkylreste, die in 1-Stellung eine Methylgruppe tragen, bedeutet und X für Sauerstoff steht.

Die Cyclopropancarboxamide der allgemeinen Formel I sind geeignet, Schädlinge aus der Klasse der Insekten, Spinnentiere und Nematoden wirksam zu bekämpfen. Sie können im Pflanzenschutz sowie auf dem Hygiene-, Vorratsschutz- und Veterinärsektor als Schädlingsbekämpfungsmittel eingesetzt werden.

Zu den schädlichen Insekten gehören aus der Ordnung der Schmetterlinge (Lepidoptera) beispielsweise Plutella maculipennis (Kohlschabe), Leucoptera coffeella (Kaffeemotte), Hyponomeuta malinellus (Apfelbaumgespinstmotte), Argyresthia conjugella (Apfelmotte), Sitotroga cerealella (Getreidemotte), Phthorimaea operculella (Kartoffelmotte), Capua reticulana (Apfelschalenwickler), Sparganothis pilleriana (Springwurm), Cacoecia murinana (Tannentriebwickler), Tortrix viridana (Eichenwickler), Clysia ambiguella (Heu- und Sauerwurm), Evetria buoliana (Kieferntriebwickler), Polychrosis botrana (Bekreuzter Traubenwickler), Cydia pomonella (Obstmade), Laspeyresia molesta (Pfirsichtriebbohrer), Laspeyresia funebrana (Pflaumenwickler), Ostrinia nubilalis (Maiszünsler), Loxostege sticticalis (Rübenzünsler), Ephestia kuehniella (Mehlmotte), Chilo suppressalis (Reisstengelbohrer), Galleria mellonella (Wachsmotte), Malacosoma neustria (Ringelspinner), Dendrolimus pini (Kiefernspinner), Thaumatopoea ptiyocampa (Pinienprozessionsspinner), Phalera bucephala (Mondfleck), Cheimatobia brumata (Kleiner Frostspanner), Hibernia defoliaria (Großer Frostspanner), Bupalus piniarius (Kiefernspanner), Hyphantria cunea (Weißer Bärenspinner), Agrotis segetum (Wintersaateule), Agrotis ypsilon (Ypsiloneule), Barathra brassicae (Kohleule), Cirphis unipuncta (Heerwurm), Prodenia litura (Baumwollraupe), Laphygma exigua (Rüben-Heerwurm), Panolis flammea (Forleule), Earias insulana

(Baumwollkapselwurm), Plusia gamma (Gammaeule), Alabama argillacea (Baumwollblattwurm), Lymantria dispar (Schwammspinner), Lymantria monacha (Nonne), Pieris brassicae (Kohlweißling), Aporia crataegi (Baumweißling);

aus der Ordnung der Käfer (Coleoptera) beispielsweise Blitophaga undata (Schwarzer Rübenaaskäfer), Melanotus communis (Drahtwurm), Limonius californicus (Drahtwurm), Agriotes lineatus (Saatschnellkäfer), Agriotes obscurus (Humusschnellkäfer), Agrilus sinuatus (Birnbaum-Prachtkäfer), Meligethes aeneus (Rapsglanzkäfer), Atomaria linearis (Moosknopfkäfer), Epilachna varivestis (Mexikanischer Bohnenkäfer), Phyllopertha horticola (Junikäfer), Popillia japonica (Japankäfer), Melolontha melolontha (Feldmaikäfer), Melolontha hippocastani (Waldmaikäfer), Amphimallus solstitialis (Brachkäfer), Crioceris asparagai (Spargelhähnchen), Lema melanopus (Getreidehähnchen), Leptinotarsa decemlineata (Kartoffelkäfer), Phaedon cochleariae (Meerrettich-Blattkäfer), Phyllotreta nemorum (Kohlerdfloh), Chaetocnema tibialis (Rübenflohkäfer), Phylloides chrysocephala (Rape-Flohkäfer), Diabrotica 12-puncta (Südlicher Maiswurzelwurm), Cassida nebulosa (Nebliger Schildkäfer), Bruchus lentis (Linsenkäfer), Bruchus rufimanus (Pferdebohnenkäfer), Bruchus pisorum (Erbsenkäfer), Sitona lineatus (Liniierter Blattrandkäfer), Ortiorrhynchus sulcatus (Gefurchter Lappenrüßler), Otiorrhynchus ovatus (Erdbeerwurzelrüßler), Hylobies abietis (Großer Brauner Rüsselkäfer), Byctiscus betulae (Rebenstecher), Anthonomus pomorum (Apfelblütenstecher), Anthonomus grandis (Kapselkäfer), Ceuthorrhynchus assimilis (Kohlschotenrüßler), Ceuthorrhynchus napi (Großer Kohltriebrüßler), Sitophilus granaria (Kornkäfer), Anisandrus dispar (Ungleicher Holzborkenkäfer), Ips typographus (Buchdrucker), Blastophagus piniperda (Gefurchter Waldgärtner);

aus der Ordnung der Zweiflügler (Diptera) beispielsweise Lycoria pectoralis, Mayetiola destructor (Hessenfliege), Basineura brassicae (Kohlschoten-Gallmücke), Contarinia tritici (Gelbe Weizen-Gallmücke), Haplodiplosis equestris (Sattelmücke), Tipula paludosa (Wiesenschnake), Tipula oleracea (Kohlschnake), Dacus cucurbitae (Melonenfliege), Dacus oleae (Olivenfliege), Ceratitis capitata (Mittelmeerfruchtfliege), Rhagoletis cerasi (Kirschfruchtfliege), Rhagoletis pomonella (Apfelmade), Anastrepha ludens (Mexikanische Fruchtfliege), Oscinella frit (Fritfliege), Phorbia coarctata (Brachfliege), Phorbia antiqua (Zwiebelfliege), Phorbia brassicae (Kleine Kohlfliege), Pegomya hysocyami (Rübenfliege), Anopheles maculipennis, Culex pipiens, Aedes aegypti (Gelbfiebermücke), Aedes vexans, Tabanus bovinus (Rinderbremse), Tipula paludosa (Wiesenschnake), Musca domestica (Stubenfliege), Fannia canicularis (Kleine Stubenfliege), Muscina stabulans, Glossina morsitans (Tsetse-Fliege), Oestrus ovis, Chrysomya macellaria, Chrysomya hominivorax, Lucilia cuprina, Lucilia sericata, Hypoderma lineata;

aus der Ordnung der Hautflügler (Hymenoptera) beispielsweise Athalia rose (Rübenblattwespe), Hoplocampa minuta (Pflaumensägewespe), Monomorium pharaonis (Pharaoameise), Solenopsis geminata (Feuerameise), Atta sexdens (Blattschneiderameise);

aus der Ordnung der Wanzen (Heteroptera) beispielsweise Nezara viridula (Grüne Reiswanze), Eurygaster integriceps (Asiatische Getreidewande), Blissus leucopterus (Chinch bug), Dysdercus cingulatus (Kapok-Wanze), Dysdercus intermedius (Baumwollwanze), Piesma quadrata (Rübenwanze), Lygus pratensis (Gemeine Wiesenwanze);

aus der Ordnung der Pflanzensauger (Homoptera) beispielsweise Perkinsiella saccharicida (Zuckerrohrzikade), Nilaparvata lugens (Braune Zikade), Empoasca fabae (Kartoffelzikade), Psylla mali (Apfelblattsauger), Psylla piri (Birnblattsauger), Trialeurodes vaporariorum (Weiße Fliege), Aphis fabae (Schwarze Bohnenlaus), Aphis pomi (Grüne Apfellaus), Aphis sambuci (Holunderblattlauf), Aphidula nasturtii (Kreuzdornblattlaus), Cerosipha gossypii (Gukrenblattlauf), Sappaphis mali (Rosige Apfellaus), Sappaphis mala (Mehlige Birnblattlaus), Dysphis radicola (Mehige Apfelfaltenlaus), Brachycaudus cardui (Große Pflaumenblattlaus), Brevicoryne brassicae (Kohlblattlaus), Phorodon humuli (Hopfenblattlaus), Rhopalomyzus ascalonicus (Zwiebellaus), Myzodes persicae (Grüne Pfirsichlaus), Myzus cerasi (Schwarze Sauerkrischenlaus), Dysaulacorthum pseudosolani (Gefleckte Kartoffellaus), Acyrthosiphon onobrychis (Grüne Erbsenalaus), Macrosiphon rosae (Große Rosenblattlaus), Megoura viciae (Wickenlaus), Schizoneura lanuginosa (Birnenblattlaus), Pemphigus bursarius (Salatwurzellaus), Dreyfusia nordmannianae (Tannentrieblaus), Dreyfusia piceae (Weißtannenstammlaus), Adelges laricis (Rote Fichtengallenlaus), Viteus vitifolii (Reblaus);

aus der Ordnung der Termiten (Isoptera) beispielsweise Reticulitermes lucifugus, Calotermes flavicollis, Leucotermes flavipes, Termes natalensis;

aus der Ordnung der Geradflügler (Orthoptera) beispielsweise Forficula auricularia (Gemeiner Ohrwurm), Acheta domestica (Heimchen), Gryllotalpa gryllotalpa (Maulwurfsgrille), Tachycines asynamorus (Gewächshausschrecke), Locusta migratoria (Wanderheuschrecke), Stauronotus maroccanus (Marokkanische Wanderheuschrecke), Schistocerca peregrina (Wanderheuschrecke), Nomadacris septemfasciata (Wanderheuschrecke), Melanoplus spretus (Felsengebirgsheuschrecke), Melanoplus femur-rubrum (Rotbeinige Heuschrecke), Blatta orientalis (Küchenschabe), Blattella germanica (Deutsche Schabe), Periplaneta americana (Amerikanische Schabe), Blabera gigantes (Riesenschabe).

Zur Klasse der Arachnoidea gehören Spinntentiere (Acarina) beispielsweise Ixodes ricinus (Holzbock), Ornithodorus moubata, Amblyomma americanum, Dermacentor silvarum, Boophilus microplus, Tetranychus telarius, Tetranychus pacificus, Paratetranychus pilosus, Bryobia praetiosa.

Zur Klasse der Nemathelminthes zählen beispielsweise Wurzelgallennematoden, z.B. Meloidogyne incognita, Meloidogyne hapla, Meloidogyne javanica, Zysten bildende Nematoden, z.B. Globodera

rostochiensis, Heterodera schatii, Heterodera avenae, Hetrodera glycinae, Hetrodera triflolii, Stock- und Blattälchen, z.B. Ditylenchus dipsaci, Ditylenchus destructor, Pratylenchus neglectus, Pratylenchus penetrans, Partylenchus goodeyi, Paratylenchus curvitatus sowie Tylenchorhynchus dubius, Tylenchorhynchus claytoni, Rotylenchus robustus, Heliocotylenchus multicinctus, Radopholus similis, Belonolaimus longicaudatus, Longidorus elongatus, Trichodorus primitivus.

Die Wirkstoffe können als solche, in Form ihrer Formulierungen oder den daraus bereiteten Anwendungsmöglichkeiten, z.B. in Form direkt versprühbaren Lösungen, Pulvern, Suspensionen oder Dispersionen, Emulsionen, Öldispersionen, Pasten, Stäubemitteln, Streumitteln, Granulaten durch Versprühen, Vernebeln, Verstäuben, Verstreuen oder Gießen angewendet werden. Die Anwendungsformen richten sich ganz nach den Verwendungszwecken; sie sollten in jedem Fall möglichst die feinste Verteilung der erfindungsgemäßen Wirkstoffe gewährleisten.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Benzol, Toluol, Xylol, Paraffin, Tetrahydronaphthalin, alkylierte Naphthaline oder deren Derivate, Methanol, Ethanol, Propanol, Butanol, Chloroform, Tetrachlorkohlenstoff, Cyclohexanol, Cyclohexanon, Chlorbenzol, Isophoron, stark polare Lösungsmittel, z.B. Dimethylformamid, Dimethylsulfoxid, N-Methylpyrrolidon, Wasser, in Betracht.

Wäßrige Anwendungsformen können aus Emulsionskonzentraten, Pasten oder netzbaren Pulvern (Spritzpulvern, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermittel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen Alkali-, Erdalkali-, Ammoniumsalze von Ligninsulfonsäure, Naphthalinsulfonsäure, Phenolsulfonsäure, Alkylarylsulfonate, Alkylsulfate, Alkylsulfonate, Alkali- und Erdalkalisalze der Dibutylnaphthalinsulfonsäure, Laurylethersulfat, Fettalkoholsulfate, fettsaure Alkali- und Erdalkali, Salze sulfatierter Hexadecanole, Heptadecanole, Octadecanole, Salze von sulfatiertem Fettalkoholglykolether, Kondensationsprodukte von sulfoniertem Naphthalin und Naphthalinderivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctylphenol, Octylphenol, Nonylphenon, Alkylphenolpolyglykolether, Tributylphenylpolyglykolether, Alkylarylpolyetheralkohole, Isotridecylalkohol, Fettalkoholethylenoxid-Kondensate, ethoxyliertes Rizinusöl, Polyoxyethylenalkylether, ethoxyliertes Polyoxypropylen, Laurylalkoholpolyglykoletheracetal, Sorbitester, Lignin, Sulfitablaugen und Methylcellulose in Betracht.

Pulver-, Streu- und Stäubemittel können durch Mischen oder gemeinsames Vermahlen der wirksamen Substanzen mit einem festen Trägerstoff hergestellt werden.

Beispiele für Formulierungen sind:

I. 5 Gew.-Teile der Verbindung Nr. 2 werden mit 95 Gew.-Teilen feinteiligem Kaolin innig vermischt. Man erhält auf diese Weise ein Stäubemittel, das 3 Gew.-% des Wirkstoffs enthält.

II. 30 Gew.-Teile der Verbindung Nr. 2 werden mit einer Mischung aus 92 Gew.-Teilen pulverförmigem Kieselsäuregel und 8 Gew.-Teilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit.

III. 10 Gew.-Teile der Verbindung Nr. 2 werden in einer Mischung gelöst, die aus 90 Gew.-Teilen Xylol, 6 Gew.-Teilen des Anlagerungsproduktes von 8 bis 10 Mol Ethylenoxid an 1 Mol Ölsäure-N-monoethanolamid, 2 Gew.-Teilen Calciumsalz der Dodecylbenzolsulfonsäure und 2 Gew.-Teilen des Anlagerungsproduktes von 40 Mol Ethylenoxid an 1 Mol Ricinusöl besteht.

IV. 20 Gew.-Teile der Verbindung Nr. 2 werden in einer Mischung gelöst, die aus 60 Gew.-Teilen Cyclohexanon, 30 Gew.-Teilen Isobutanol, 5 Gew.-Teilen des Anlagerungsproduktes von 7 Mol Ethylenoxid an 1 Mol Isooctylphenol und 5 Gew.-Teilen des Anlagerungsproduktes von 40 Mol Ethylenoxid an 1 Mol Ricinusöl besteht.

V. 80 Gew.-Teile der Verbindung Nr. 2 werden mit 3 Gew.-Teilen des Natriumsalzes der Diisobutylnaphthalin-alpha-sulfonsäure, 10 Gew.-Teilen des Natriumsalzes einer Ligninsulfonsäure aus einer Sulfit-Ablauge und 7 Gew.-Teilen pulverförmigem Kieselsäuregel gut vermischt und in einer Hammermühle vermahlen.

Granulate, z.B. Umhüllungs-, Imprägnierungs- und Homogengranulate, können durch Bindung der Wirkstoffe an feste Trägerstoffe hergestellt werden. Feste Trägerstoffe sind z.B. Mineralerden, wie Silicagel, Kieselsäuren, Kieselgele, Silikate, Talkum, Kaolin, Attaclay, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehl, Baumrinden-, Holz- und Nußschalenmehl, Cellulosepulver und andere feste Trägerstoffe.

Die Formulierungen enthalten im allgemeinen zwischen 0,1 und 95 Gew.-% Wirkstoff, vorzugsweise zwischen 0,5 und 90 Gew.-%.

Die Wirkstoffkonzentrationen in den anwendungsfertigen Zubereitungen können in größeren Bereichen variiert werden.

Im allgemeinen liegen sie zwischen 0,0001 und 10%, vorzugsweise zwischen 0,01 und 1%. Die Wirkstoffe können auch mit gutem Erfolg im Ultra-Low-Volume-Verfahren (ULV) verwendet werden, wobei es möglich ist, Formulierungen mit mehr als 95 Gew.-% Wirkstoff oder sogar den Wirkstoff ohne Zusätze auszubringen.

Die Aufwandmenge an Wirkstoff beträgt unter Freilandbedingungen 0,2 bis 10, vorzugsweise 0,5 bis 2,0 kg/ha.

Zu den Wirkstoffen können Öle verschiedenen Typs, Herbizide, Fungizide, andere Schädlingsbekämpfungsmittel, Bakterizide, gegebenenfalls auch erst unmittelbar vor der Anwendung (Tankmix), zugesetzt werden. Diese Mittel können zu den erfindungsgemäßen Mitteln im Gewichtsverhältnis 1:10 bis 10:1 zugemischt werden.

Beispielsweise können folgende Mittel zugemischt werden: 1,2 - Dibrom - 3 - chlorpropan, 1,3 - Dichlorpropan, 1,3 - Dichlorpropen + 1,2 - Dichlorpropan, 1,2 - Dibromethan, 2 - sec. - Butyl - phenyl - N - methylcarbamat, o - Chlorphenyl - N - methylcarbamat, 3 - Isopropyl - 5 - methylphenyl - N - methylcarbamat, o - Isopropoxyphenyl - N - methylcarbamat, 3,5 - Dimethyl - 4 - methylmercapto - phenyl - N - methylcarbamat, 4 - Dimethylamino - 3,5 - xylyl - N - methylcarbamat, 2 - (1,3 - Dioxolan - 2 - yl) - phenyl - N - methylcarbamat, 1 - Naphthyl - N - methylcarbamat, 2,3 - Dihydro - 2,2 - dimethyl - benzofuran - 7 - yl - N - methylcarbamat, 2,2 - Dimethyl - 1,3 - benzodioxol - 4 - yl - N - methylcarbamat, 2 - Dimethylamino - 5,6 - dimethyl - 4 - pyrimidinyl - dimethylcarbamat, 2 - Methyl - 2 - (methylthio) - propionaldehyd - O - (methylcarbamoyl) - oxim, S - Methyl - N - [(methylcarbamoyl) - oxyl] - thio - acetimidat, Methyl - N',N' - dimethyl - N - [(methylcarbamoyl)oxy] - 1 - thio - oxamidat, N - (2 - Methylchlorphenyl) - N',N' - dimethylformamidin, Tetrachlorthiophen, 1 - (2,6 - Difluor - benzoyl) - 3 - (4 - chlorphenyl) - harnstoff, O,O - Dimethyl - O - (p - nitrophenyl) - phosphorthioat, O,O - Diethyl - O - (p - nitrophenyl) - phosphorthioat, O - Ethyl - O - (p - nitrophenyl) - phenyl - phosphonothioat, O,O - Dimethyl - O - (3 - methyl - 4 - nitrophenyl) - phosphorthioat, O,O - Diethyl - O - (2,4 - dichlorphenyl) - phosphorthioat, O - Ethyl - O - (2,4 - dichlorphenyl) - phenyl - phosphonothioat, O,O - Dimethyl - O - (2,4,5 - trichlorphenyl) - phosphorthioat, O - Ethyl - O - (2,4,5 - trichlorphenyl) - ethyl - phosphorthioat, O,O - Dimethyl - O - (4 - brom - 2,5 - dichlorphenyl) - phosphorthioat, O,O - Dimethyl - O - (2,5 - dichlor - 4 - jodphenyl) - phosphorthioat, O,O - Dimethyl - O - (3 - methyl - 4 - methylthiophenyl) - phosphorthioat, O - Ethyl - O - (3 - methyl - 4 - methylthiophenyl) - isopropyl - phosphoramidat, O,O - Diethyl - O - (p - methylsulfinyl - phenyl) - phosphorthioat, O - Ethyl - S - phenyl - ethyl - phosphonodithioat, O,O - Diethyl - [2 - chlor - 1 - (2,4 - dichlorphenyl) - vinyl] - phosphat, O,O - Dimethyl - [2 - chlor - 1 - (2,4,5 - trichlorphenyl)] - vinylphosphat, O,O - Dimethyl - S - (1' - phenyl) - ethylacetat-phosphordithioat, Bis - (dimethylamino) - fluorphosphinoxid, Octamethyl - pyrophosphoramid, O,O,O,O - Tetraethyldithio - pyrophosphat, S - Chlormethyl - O,O - diethyl - phosphordithioat, O - Ethyl - S,S - dipropyl - phosphordithioat, O,O - Dimethyl - O - 2,2 - dichlorvinyl - phosphat, O,O - Dimethyl - 1,2 - dibrom - 2,2 - dichlorethylphosphat, O,O - Dimethyl - 2,2,2 - trichlor - 1 - hydroxy - ethylphosphonat, O,O - Dimethyl - S - [1,2 - biscarbethoxy - ethyl - (1)] - phosphordithioat, O,O - Dimethyl - O - (1 - methyl - 2 - carbmethoxy - vinyl) - phosphat, O,O - Dimethyl - S - (N - methyl - carbamoyl - methyl) - phosphordithioat, O,O - Dimethyl - S - (N - methylcarbamoyl - methyl) - phosphorthioat, O,O - Dimethyl - S - (N - methoxyethyl - carbamoylmethyl) - phosphordithioat, O,O - Dimethyl - S - (N - formyl - N - methyl - carbamoyl - methyl) - phosphordithioat, O,O - Dimethyl - O - [1 - methyl - 2 - (methyl - carbamoyl) - vinyl] - phosphat, O,O - Dimethyl - O - [(1 - methyl - 2 - dimethylcarbamoyl) - vinyl] - phosphat, O,O - Dimethyl - O - [(1 - methyl - 2 - chlor - 2 - diethylcarbamoyl) - vinyl] - phosphat, O,O - Diethyl - S - (ethylthiomethyl) - phosphordithioat, O,O - Diethyl - S - [(p - chlorphenylthio) - methyl] - phosphordithioat, O,O - Dimethyl - S - (2 - ethylthioethyl) - phosphorthioat, O,O - Dimethyl - S - (2 - ethylthioethyl) - phosphordithioat, O,O - Dimethyl - S - (2 - ethylsulfinyl - ethyl) - phosphorthioat, O,O - Diethyl - S - (2 - ethylthio - ethyl) - phosphordithioat, O,O - Diethyl - S - (2 - ethylsulfinyl - ethyl) - phosphorthioat, O,O - Diethyl - thiophosphoryliminophenyl) - acetonitril, O,O - Diethyl - S - (2 - chlor - 1 - phthalimidoethyl) - phosphordithioat, O,O - Diethyl - S - [6 - chlor - benzoxazolon - (2) - yl(3)] - methyldithiophosphat, O,O - Dimethyl - S - [2 - methoxy - 1,3,4 - thiadiazol - 5 - [4H] - onyl - (4) - methyl] - phosphordithioat, O,O - Diethyl - O - [3,5,6 - trichlor - pyridyl - (2)] - phosphorthioat, O,O - Diethyl - O - (2 - pyrazinyl) - phosphorthioat, O,O - Diethyl - O - [2 - isopropyl - 4 - methylpyrimidinyl(6)] - phosphorthioat, O,O - Diethyl - O - [2 - (diethylamino) - 6 - methyl - 4 - pyrimidinyl] - thionophosphat, O,O - Dimethyl - S - (4 - oxo - 1,2,3 - benzotriazin - 3 - [4H] - yl - methyl) - phosphordithioat, O,O - Dimethyl - S - [(4,6 - diamino - 1,3,5 - triazin - 2 - yl) - methyl] - phosphordithioat, O,O - Diethyl - (1 - phenyl - 1,2,4 - triazol - 3 - yl) - thionophosphat, O,S - Dimethyl - phosphor - amidothioat, O,S - Dimethyl - N - acetyl - phosphoramidothioat, alpha - Hexachlorcyclohexan, 1,1 - Di - (p - methoxyphenyl) - 2,2,2 - trichlor - ethan, 6,7,8,9,10,10 - Hexachloro - 1,5,5a,6,9,9a - hexahydro - 6,9 - methano - 2,4,3 - benzodioxa - thiepin - 3 - oxid, Pyrethrine, DL - 2 - Allyl - 3 - methyl - cyclopenten - (2) - on - (1) - yl - (4) - DL - cis, -trans - chrysanthemat, 5 - Benzyl -

furyl - (3) - methyl - DL - cis, -trans - chrysanthemat, 3 - Phenoxybenzyl(±) - cis, -trans - 2,2 - dimethyl - 3 - (2,2 - dichlorvinyl) - cyclopropancarboxylat, alpha - Cyano - 3 - phenoxybenzyl(±) -cis, - trans - 2,2 - dimethyl - 3 - (2,2 - dichlorvinyl) - cyclopropancarboxylat, (s) - alpha - Cyano - 3 - phenoxybenzyl - cis(1R,3R) - 2,2 - dimethyl - 3 - (2,2 - dibromvinyl) - cyclopropancarboxylat, 3,4,5,6 - Tetrahydrophthalimidoethyl - DL -cis, -trans - chrysanthemat, 2 - Methyl - 5 - (2 - propinyl) - 3 - furylmethyl - chrysanthemat, (alpha - Cyano - 3 - phenoxybenzyl) - alpha - isopropyl - 4 - chlorphenylacetat.

Herstellungsbeispiel

N-{2-[4-(1-Methylprop-1-yloxy)-phenoxy]-ethyl}-cyclopropancarboxamid

Zu einer Lösung von 6,5 g 2-[4-(1-Methylprop-1-yloxy)-phenoxy]-ethylamin und 3,5 g Triethylamin in 100 ml absolutem Methylenchlorid wird bei 5°C 3,4 g Cyclopropancarbonsäurechlorid zugetropft. Nach 8 stündigem Rühren bei Raumtemperatur gießt man auf 200 g Eis/Wasser und stellt mit 2 N wäßriger Salzsäure auf pH 2 ein. Anschließend wird die wäßrige Phase zweimal mit je 50 ml Methylenchlorid extrahiert, die vereinigten organischen Phasen mit gesättigter Natriumcarbonatlösung und Wasser gewaschen und über Natriumsulfat getrocknet. Nach Entfernung des Solvens i.Vak. und Umkristallisieren aus Cyclohexan erhält man 6,4 g N-{2-[4-(1-Methylprop-1-yloxy)-phenoxy]-ethyl}cyclopropancarboxamid (Verbindung Nr. 2); Fp.: 65—68°C.

Die ohne Angabe physikalischer Kenngrößen in der nachstehenden Tabelle aufgeführten Verbindungen I können aus entsprechenden Vorprodukten ohne weiteres erhalten werden und lassen eine gleichartige Wirkung erwarten.

Tabelle

Verbindung I

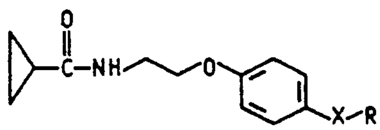

(I)

| Verbindung Nr. | R | X | Smp. [°C] | $^1$H-NMR in $CDCl_3$ |
| --- | --- | --- | --- | --- |
| 1 | 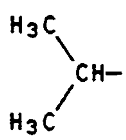 | O | 98-100 | |
| 2 | 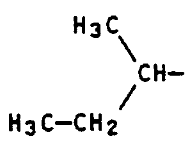 | O | 65- 68 | |
| 3 | 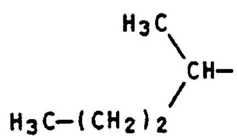 | O | | 6,84 (s) |
| 4 | 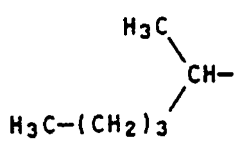 | O | 52-54 | |
| 5 | 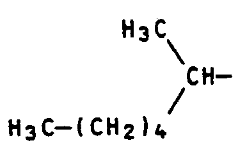 | O | 58-61 | |
| 6 | 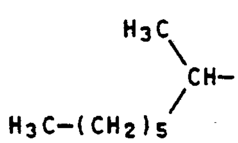 | O | | |

| Verbindung Nr. | R | X | Smp. [°C] | $^1H$-NMR in $CDCl_3$ |
|---|---|---|---|---|
| 7 | 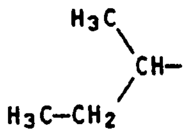 | S | 82-84 | |
| 8 | 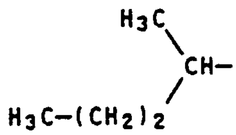 | S | | |
| 9 | 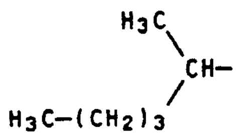 | S | | |
| 10 | 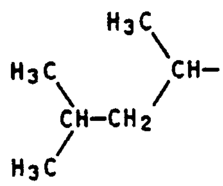 | O | | 6,80 (s) |
| 11 | 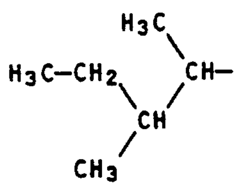 | O | | 6,81 (s) |
| 12 | 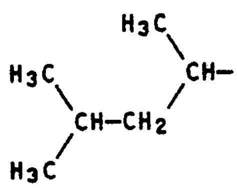 | S | | |
| 13 | 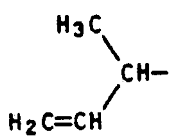 | O | | |
| 14 | $H_2C=CH-CH_2-$ | O | | |
| 15 | 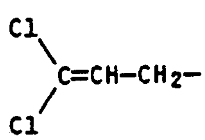 | O | | |

| Verbindung Nr. | R | X | Smp. [°C] | $^1H$-NMR in $CDCl_3$ |
|---|---|---|---|---|
| 16 | 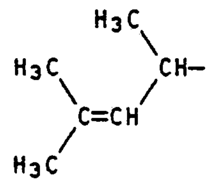 | O | | |
| 17 | 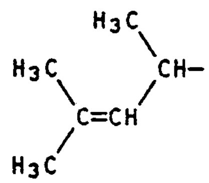 | S | | |
| 18 | Cyclobutyl | O | | |
| 19 | Cyclopentyl | O | | |
| 20 | Cyclohexyl | O | 90- 93 | |
| 21 | Cyclopropyl-methyl | O | | |
| 22 | Cyclohexyl-methyl | O | | |
| 23 | 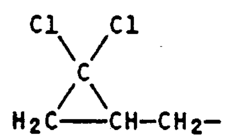 | O | 65- 68 | |
| 24 | 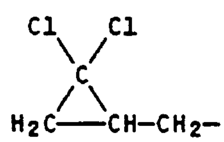 | S | | 6,72 und 7,48 (2d) |
| 25 | $HC{\equiv}C{-}CH_2{-}$ | O | 119-121 | |
| 26 | $Cl{-}C{\equiv}C{-}CH_2{-}$ | O | | |
| 27 | 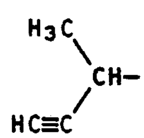 | O | 115-117 | |
| 28 | 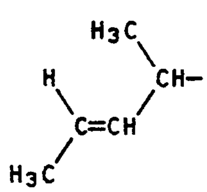 | O | | |
| 29 | 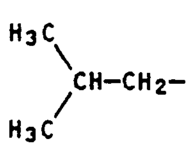 | O | 94- 96 | |

| Verbindung Nr. | R | X | Smp. [°C] | $^1$H-NMR in $CDCl_3$ |
|---|---|---|---|---|
| 30 | 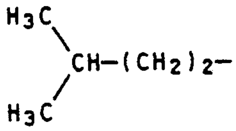 | O | 110-112 | |
| 31 | 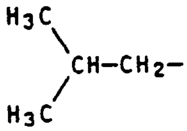 | S | | |
| 32 | 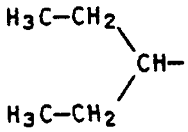 | O | | 6,80 (s) |
| 33 | 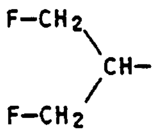 | O | | |
| 34 | $F_3C-CH_2-$ | O | | |
| 35 | 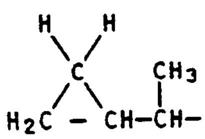 | O | | |
| 36 | $Cl-CH=CH-CH_2-$ | O | | |
| 37 | 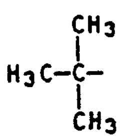 | O | 75- 76 | |
| 38 | $H_3C-CH_2-CH_2-$ | O | 99-100 | |
| 39 | $H_3C-CH_2-CH_2-CH_2-$ | O | 100-102 | |
| 40 | $H_3C-$ | O | 106-109 | |
| 41 | $H_3C-CH_2-$ | O | 102-104 | |
| 42 | $H_3C(CH_2)_4-$ | O | 102-104 | |
| 43 | 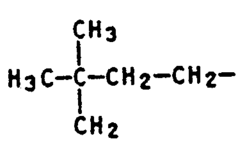 | O | 62- 65 | |

| Verbindung Nr. | R | X | Smp. [°C] | $^1$H-NMR in $CDCl_3$ |
|---|---|---|---|---|
| 44 | 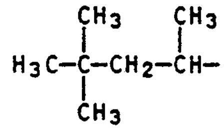 | O | 57- 61 | |
| 45 | 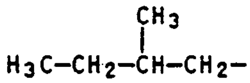 | O | 54- 60 | |
| 46 | 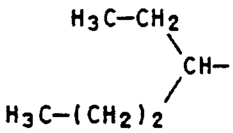 | O | | 6,80 (s) |
| 47 | 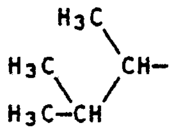 | O | | 6,82 (s) |
| 48 | 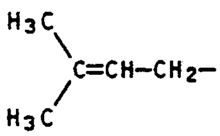 | O | 77- 79 | |
| 49 | 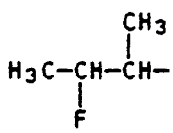 | O | | |
| 50 | 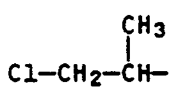 | O | | |
| 51 | 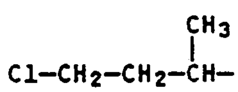 | O | | |
| 52 | 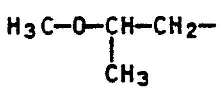 | O | 69- 73 | |
| 53 | 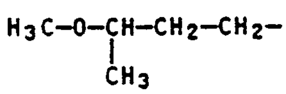 | O | 95- 97 | |
| 54 | 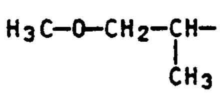 | O | | 3,40 (s) |
| 55 | $H_3C-O-CH_2-CH_2-$ | O | 108-114 | |

| Verbindung Nr. | R | X | Smp. [°C] | $^1H$-NMR in $CDCl_3$ |
|---|---|---|---|---|
| 56 | $CH_3$<br>$H_3C-O-CH_2-CH_2-CH$ | O | | 3,28 (s) |
| 57 | $H_3C-O-CH_2-CH_2-$ | S | | 3,32 (s) |
| 58 | $H_3C-O-CH_2-CH-$<br>$CH_3$ | S | | 3,42 (s) |

Anwendungsbeispiele

In den folgenden Beispielen wurden die erfindungsgemäßen Verbindungen hinsichtlich ihrer Wirkung auf Schädlinge gegen die nachstehenden Verbindungen des Standes der Technik verglichen:

(I′)

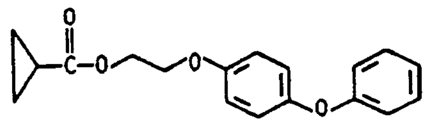

aus DE-A-26 33 069

(I″)

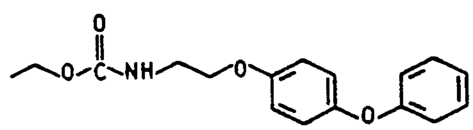

aus EP-A-4334 und

(I‴)

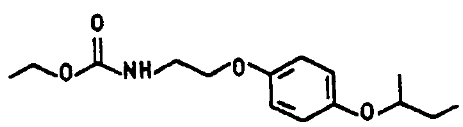

aus EP-A-169 169.

Die Konzentrationen, bei denen die untersuchten Verbindungen eine 100%ige Mortalität bzw. Hemmung bewirken, sind die jeweiligen Minimalkonzentrationen. Bei jeder Konzentration wurden mindestens 2 Versuche angesetzt.

Zuchtversuch mit Moskito-Larven (Aedes aegypti)

200 ml Leitungswasser werden mit der Wirkstoffaufbereitung versetzt und darauf mit 20 bis 30 Moskitolarven im 4. Larvenstadium besetzt. Die Gefäße stehen bei 25°C. Beobachtet werden Verpuppung und Schlüpfen der Imagines, welches nach 10 bis 12 Tagen erfolgt. Während der Beobachtungszeit wird einmal mit gepulvertem Zierfischfutter gefüttert.

Bei diesem Versuch erzielte die Verbindung Nr. 2 bei 0,03 ppm eine 100%ige Mortalität, während die Vergleichsverbindung I′ eine 50%ige und die Vergleichsverbindung I″ eine 80%ige Mortalität erzielten.

Zuchtversuch mit Dysdercus intermedius (Baumwollwanzen)

In einem 1 l-Glas werden Larven im vierten Larvenstadium auf feuchtem, mit einer Wirkstofflösung behandeltem Quarzsand bei 25°C gehalten. Die Versuchsdauer erstreckt sich bis zum Schlupf der Folgegeneration. Beim Schlupf der Imagines werden Morphogenesestörungen bonitiert.

Bei diesem Versuch bewirkte die Verbindung Nr. 2 bei 1 ppm im Sand eine 80%ige Mortalität, während bei der Vergleichsverbindung I′ keine, bei der Vergleichsverbindung I″ eine 30%ige Mortalität festgestellt wurde und bei der Vergleichsverbindung I‴ die 10fache Menge nötig war, um ebenfalls 80% Mortalität zu erzielen.

Entwicklungshemmung bei Prodenia litura (Prüfung auf behandeltem Nährboden)

100 g des Standard-Nährbodens für Prodenia werden in 250 ml-Becher gefüllt und warm mit der wäßrigen Wirkstoffaufbereitung sorgfältig gemischt. Nach Erkalten belegt man jedes Gefäß mit 10 Raupen im 4. Larvenstadium und lagert sind bei 23°C. Die Beobachtung erstreckt sich bis zum Schlupf der Falter.

Bei diesem Versuch erzielte die Verbindung Nr. 2 bei 0,3 ppm eine 100%ige Mortalität, bei 0,1 und 0,03 ppm eine 80%ige Mortalität und bei 0,1 ppm eine 60 %ige Mortalität. Die Vergleichsverbindung I′ zeigte bei all diesen Mengen keine Mortalität. Die Vergleichsverbindung I″ erzielte bei 0,3, 0,1 und 0,03 ppm jeweils eine 100%ige Mortalität, die bei 0,01 ppm auf 60% sinkt.

Ovizide Wirkung bei Ceratitis capitata (Mittelmeerfruchtfliege)

In einem geschlossenen Gefäß werden 20 bis 30 Eier, die 0 bis 24 Stunden alt sind, auf ein 5 mal 5 cm großes Filterpapier gelegt und eine mit Wasser befeuchtete halbe Watterolle und eine Karottenbreikugel von 1,5 cm Durchmesser beigefügt. Das Filterpapier wird mit 1,5 ml der Testlösung befeuchtet und während der Versuchsdauer von 5 bis 6 Tagen bei 25 bis 26°C gehalten. Der Schlupf und die Entwicklung der Larven wird bonitiert.

In diesem Versuch war die Verbindung Nr. 2 bei einer Dosis von 1% gleich wirksam wie Vergleichsverbindung $I^{II}$. Bei 0,3% blieb die Wirkung von Verbindung Nr. 2 erhalten; Verbindung $I^{II}$ war wirkungslos. Vergleichsverbindung I' war bei den untersuchten Mengen jeweils wirkungslos.

In den folgenden Beispielen wurden die erfindungsgemäßen Verbindungen 3, 10 und 30 hinsichtlich ihrer Wirkung auf Schädlinge gegen die nachstehende Verbindung ($I^V$) des Standes der Technik verglichen:

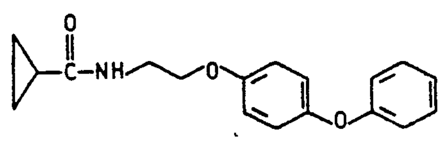

($I^V$)

Die Konzentrationen, bei denen die untersuchten Verbindungen eine 100%ige Mortalität bzw. Hemmung bewirken, sind die jeweiligen Minimalkonzentrationen. Bei jeder Konzentration wurden mindestens 2 Versuche angesetzt.

Zuchtversuch mit Dysdercus intermedius (Baumwollwanze)

In einem 1 l-Glas wurden Larven im dritten Larvenstadium auf feuchtem, mit einer Wirkstofflösung behandelten Quarzsand bei 25°C gehalten. Die Versuchsdauer erstreckt sich bis zum Schlupf der Folgegeneration.

Bei diesem Versuch bewirkten die Verbindungen Nr. 10 und 30 unterhalb von 0,5 ppm eine 100%ige Mortalität, während die Vergleichsverbindung ($I^V$) erst bei 1 ppm zu 100%iger Mortalität führt und bei Verbindung Nr. 3 4 ppm dazu benötigt werden.

Ovizide Wirkung bei Dysdercus intermedius (Baumwollwanze)

Stecketiketten werden am oberen Rand mit Klebestreifenstücken beklebt und die Eier von Dysdercus intermedius 24 Stunden vor Versuchsbeginn daran befestigt. Die Eier werden mit einer wäßrigen Wirkstoffaufbereitung behandelt und die Stecketiketten in geschlossene Plastikbecher gestellt, Klebestreifen nach oben. Eine halbe mit Wasser durchfeuchtete Watterolle wird in den Becher gelegt, um Austrocknung zu vermeiden. Nach ca. 8 Tagen, wenn die Larven geschlüpft sind, wird bonitiert. Beurteilt wird die Schlupfhemmung in %.

Bei diesem Versuch waren Verbindung 30 und die Vergleichsverbindung ($I^V$) bei 1000 ppm wirkungslos, während die Verbindungen 3 und 10 bei weitaus geringerer Konzentration (200 ppm und darunter) 80% Schlupfhemmung bewirkten.

Entwicklungshemmung bei Prodenia litura (Ägypt. Baumwollwurm) auf behandeltem Nährboden

100 g des Standard-Nährbodens für Prodenia werden in 250 ml-Becher gefüllt und warm mit der wäßrigen Wirkstoffaufbereitung sorgfältig gemischt. Nach Erkalten belegt man jedes Gefäß mit 5 Raupen im dritten Larvenstadium und lagert sie bei 25 bis 26°C. Die Beobachtung erstreckt sich bis zum Schlüpfen der Falter.

Bei diesem Versuch wurden 100% Mortalität erzielt bei Konzentrationen von 0,02 ppm ($I^V$), 0,02 und 0,04 ppm (Verbindungen 3 und 10) und 0,1 ppm (Verbindung 30).

Zuchtversuch bei Tribolium castaneum (Reismehlkäfer)

10 g Weizenmehl werden in 250 ml Joghurtflaschen gefüllt und mit der entsprechenden Wirkstoffmenge als Staubformulierung gemischt. 20 Käfer wurden 14 Tage lang zur Eiablage eingesetzt und dann entfernt. Die Versuchsdauer erstreckt sich bis zum Schlupf der nächsten Käfergeneration. Die Versuchstemperatur beträgt 24°C.

Bei diesem Versuch wurden 100% Mortalität mit den erfindungsgemäßen Verbindungen 3, 10 und 30 bei einer Konzentration von 10 ppm erzielt, während die Vergleichsverbindung bei 4fach höherer Konzentration nur 80% Mortalität bewirkte.

Zuchtversuch bei Ceratitis capitata (Mittelmeerfruchtfliege)

Die Versuche werden in 100 ml Plastikbechern auf 40 g eines Nährbodens aus Karottenpulver und Wasser mit Hefezusatz durchgeführt. Der Wirkstoff wird als wäßrige Aufbereitung in den fertigen Brei eingerührt und dieser mit 100 bis 200 frischen Eiern beimpft. Die Becher werden bei 24 bis 26°C geschlossen aufbewahrt. Nach ca. einer Woche nach Schlupf der Larven wird bonitiert.

Bei diesem Versuch zeigte Verbindung 3 eine 80%ige Mortalität bei 10 ppm, während alle übrigen

Verbindungen einschließlich ($I^V$) bei 10fach höherer Konzentration wirkungslos waren.

Zuchtversuch bei Ephestia kuehniella (Mehlmotte)

Weizenmehl, welches stark mit Eiern der Mehlmotte belegt ist, wird mit den Wirkstoffen innig gemischt. 10 g werden in 250 ml-Gläser abgefüllt und bei 25°C gelagert. Nach 6 Wochen beurteilt man die Entwicklung der Larven.

Bei diesem Versuch zeigten alle erfindungsgemäßen Verbindungen 100% Mortalität, während die Vergleichsverbindung ($I^V$) bei 4fach höherer Konzentration nur 75% Mortalität bewirkte.

**Patentansprüche**

1. Cyclopropancarboxamide der allgemeinen Formel I

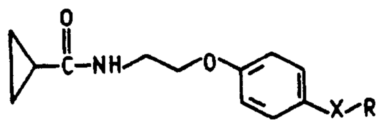

(I),

in der die Substituenten folgende Bedeutung haben:

R $C_1$—$C_{12}$-Alkyl, $C_2$—$C_{12}$-Alkenyl, $C_2$—$C_{12}$-Alkinyl, $C_1$—$C_{12}$-Halogenalkyl, $C_2$—$C_{12}$-Halogenalkenyl, $C_2$—$C_{12}$-Halogenalkinyl, $C_3$—$C_{12}$-Alkoxyalkyl, $C_3$—$C_8$-Cycloalkyl, $C_4$—$C_{12}$-Cycloalkyl-alkyl, $C_3$—$C_8$-Halogencycloalkyl, $C_4$—$C_{12}$-Halogencycloalkyl-alkyl, $C_4$—$C_{12}$-Cycloalkyl-halogenalkyl oder $C_4$—$C_{12}$-Halogencycloalkyl-halogenalkyl und

X Sauerstoff oder Schwefel.

2. Verfahren zur Herstellung von Cyclopropancarboxamiden der allgemeinen Formel I

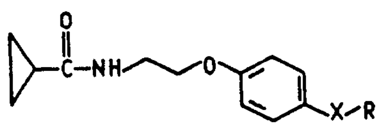

(I),

in der die Substituenten folgende Bedeutung haben:

R $C_1$—$C_{12}$-Alkyl, $C_2$—$C_{12}$-Alkenyl, $C_2$—$C_{12}$-Alkinyl, $C_1$—$C_{12}$-Halogenalkyl, $C_2$—$C_{12}$-Halogenalkenyl, $C_2$—$C_{12}$-Halogenalkinyl, $C_3$—$C_{12}$-Alkoxyalkyl, $C_3$—$C_8$-Cycloalkyl, $C_4$—$C_{12}$-Cycloalkyl-alkyl, $C_3$—$C_8$-Halogencycloalkyl, $C_4$—$C_{12}$-Halogencycloalkyl-alkyl, $C_4$—$C_{12}$-Cycloalkyl-halogenalkyl oder $C_4$—$C_{12}$-Halogencycloalkyl-halogenalkyl und

X Sauerstoff oder Schwefel

dadurch gekennzeichnet, daß man ein 2-Phenoxyethylamin der allgemeinen Formel II

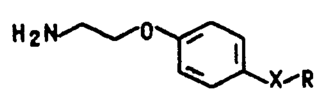

(II),

mit einem Cyclopropancarbonsäurehalogenid der allgemeinen Formel III

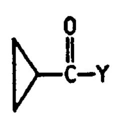

(III),

in der Y für Halogen steht, umsetzt.

3. Schädlingsbekämpfungsmittel, enthaltend ein Cyclopropancarboxamid der Formel I gemäß Anspruch 1 neben hierfür üblichen Trägerstoffen.

4. Verfahren zur Bekämpfung von Schädlingen, dadurch gekennzeichnet, daß man eine wirksame Menge eines Cyclopropancarboxamides der Formel I gemäß Anspruch 1 auf die Schädlinge bzw. deren Lebensraum einwirken läßt.

5. Cyclopropancarboxamid der allgemeinen Formel I nach Anspruch 1 in der R verzweigtes Alkyl, Alkoxyalkyl, Alkenyl oder Alkinyl mit einer Methylgruppe in 1-Stellung und X Sauerstoff bedeutet.

6. Cyclopropancarboxamid der allgemeinen Formel I nach Anspruch 1, in der R 1-Methylprop-1-yl und X Sauerstoff bedeutet.

**Revendications**

1. Cyclopropancarboxamides de la formule générale I

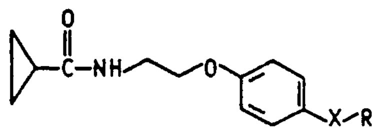

(I),

dans laquelle les substituants ont les significations suivantes

R, alkyle en $C_1$—$C_{12}$, alcényle en $C_2$—$C_{12}$, alcynyle en $C_2$—$C_{12}$, halogènalkyle en $C_1$—$C_{12}$, halogènalcényle en $C_2$—$C_{12}$, halogènalcynyle en $C_2$—$C_{12}$, alcoxyalkyle en $C_3$—$C_{12}$, cycloalkyle en $C_3$—$C_8$, cycloalkyl-alkyle en $C_4$—$C_{12}$, halogèncycloalkyle en $C_3$—$C_8$, halogèncycloalkyl-alkyle en $C_4$—$C_{12}$, cycloalkyl-halogénalkyle en $C_4$—$C_{12}$ ou halogèncycloalkyl-halogènalkyle en $C_4$—$C_{12}$

X, oxygène ou soufre.

2. Procédé de préparation de cyclopropancarboxamides de la formule générale I

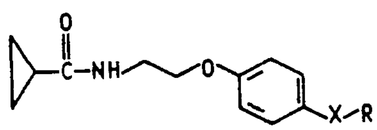

(I),

dans laquelle les substituants ont les significations suivantes

R, alkyle en $C_1$—$C_{12}$, alcényle en $C_2$—$C_{12}$, alcynyle en $C_2$—$C_{12}$, halogènalkyle en $C_1$—$C_{12}$, halogènalcényle en $C_2$—$C_{12}$, halogénalcynyle en $C_2$—$C_{12}$, alcoxyalkyle en $C_3$—$C_{12}$, cycloalkyle en $C_3$—$C_8$, cycloalkyl-alkyle en $C_4$—$C_{12}$, halogèncycloalkyle en $C_3$—$C_8$, halogèncycloalkyl-alkyle en $C_4$—$C_{12}$, cycloalkyl-halogènalkyle en $C_4$—$C_{12}$ ou halogèncycloalkyl-halogènalkyle en $C_4$—$C_{12}$

X, oxygène ou soufre,

caractérisé par le fait qu'on fait réagir une 2-phénoxyéthylamine de la formule générale II

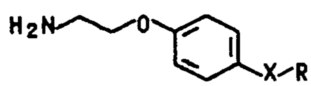

(II),

avec un halogénure d'acide cyclopropancarboxylique de la formule générale III

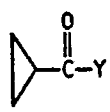

(III),

dans laquelle Y est mis pour halogène.

3. Pesticide contenant un cyclopropancarboxamide de la formule générale I, outre des supports usuels pour cela.

4. Procédé de lutte contre des parasites, caractérisé par le fait qu'on fait agir sur les parasites ou leur biotope une quantité efficace d'un cyclopropancarboxamide de la formule générale I.

5. Cyclopropancarboxamide de la formule générale I dans laquelle R représente alkyle ramifié, alcoxyalkyle, alcényle ou alcynyle ayant un groupe méthyle en position 1 et X représente oxygène.

6. Cyclopropancarboxamide de la formule générale I dans laquelle R représente 1-méthylprop-1-yle et X oxygène.

**Claims**

1. A cyclopropanecarboxamide of the general formula I

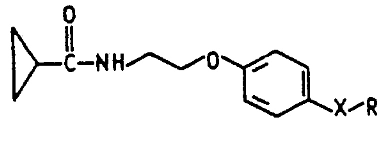

(I),

where the substituents have the following meanings:

R is $C_1$—$C_{12}$-alkyl, $C_2$—$C_{12}$-alkenyl, $C_2$—$C_{12}$-alkynyl, $C_1$—$C_{12}$-haloalkyl, $C_2$—$C_{12}$-haloalkenyl, $C_2$—$C_{12}$-haloalkynyl, $C_3$—$C_{12}$-alkoxyalkyl, $C_3$—$C_8$-cycloalkyl, $C_4$—$C_{12}$-cycloalkylalkyl, $C_3$—$C_8$-halocycloalkyl, $C_4$—$C_{12}$-

halocycloalkylalkyl, $C_4$—$C_{12}$-cycloalkylhaloalkyl or $C_4$—$C_{12}$-halocycloalkylhaloalkyl and

X is oxygen or sulfur.

2. A process for the preparation of cyclopropanecarboxamides of the general formula I

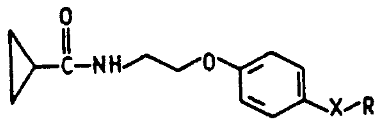

(I),

where the substituents have the following meanings:

R is $C_1$—$C_{12}$-alkyl, $C_2$—$C_{12}$-alkenyl, $C_2$—$C_{12}$-alkynyl, $C_1$—$C_{12}$-haloalkyl, $C_2$—$C_{12}$-haloalkenyl, $C_2$—$C_{12}$-haloalkynyl, $C_3$—$C_{12}$-alkoxyalkyl, $C_3$—$C_8$-cycloalkyl, $C_4$—$C_{12}$-cycloalkylalkyl, $C_3$—$C_8$-halocycloalkyl, $C_4$—$C_{12}$-halocycloalkylalkyl, $C_4$—$C_{12}$-cycloalkylhaloalkyl or $C_4$—$C_{12}$-halocycloalkylhaloalkyl and

X is oxygen or sulfur,

wherein a 2-phenoxyethylamine of the general formula II

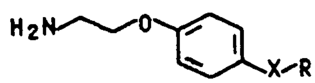

(II),

is reacted with a cyclopropanecarboxylic acid halide of the general formula III

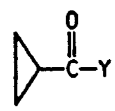

(III),

where Y is halogen.

3. A pesticide containing a cyclopropanecarboxamide of the formula I as claimed in claim 1, together with conventional carriers therefor.

4. A process for controlling pests, wherein an effective amount of a cyclopropanecarboxamide of the formula I as claimed in claim 1 is allowed to act on the pests or their habitat.

5. A cyclopropanecarboxamide of the general formula I as claimed in claim 1, where R denotes branched alkyl, alkoxyalkyl, alkenyl or alkynyl with a methyl group in the 1-position, and X is oxygen.

6. A cyclopropanecarboxamide of the general formula I as claimed in claim 1, where R denotes 1-methylprop-1-yl and X is oxygen.